# DEMANDE DE BREVET EUROPEEN

(11) **EP 1 004 785 A1**
(43) Date de publication de la demande: **31.05.2000**
(21) Numéro de dépôt: 98203957.0
(22) Date de dépôt: 24.11.1998
(51) Int. Cl.: F16D 1/10

(54) **Accouplement en rotation de deux arbres coaxiaux**

(71) Demandeur: Techspace aero, 4041 Milmort - Herstal (BE)
(72) Inventeur: Promper, Christophe, 4800 Verviers (BE); Pacchioni, Lorenzo, 4690 Roclenge-S-Geer (BE)
(74) Mandataire: Berrou, Paul

(57) **Abrégé**

L'invention propose une liaison (30) de puissance en rotation entre deux arbres (11,25) tournants coaxiaux positionnés l'un par rapport à l'autre. Une telle liaison (30) est remarquable en ce qu'elle combine un entraînement en rotation par interpénétration de dents (41) dans des creux (32), les flancs femelles (34) des creux (32) étant évasés vers l'ouverture (33) alors que les flancs mâles (43) des dents (41) étant rapprochés vers le sommet (42), et un soufflet métallique (50) mis en compression, une telle liaison (30) étant flexible, amovible et non sujette au matage des surfaces en contact.

Application non exclusive à entraînement d'une vanne cryotechnique (20) avec son actionneur ou moteur de commande (13).

## Description

### Domaine technique de l'invention

L'invention se rapporte à une liaison de puissance en rotation entre deux arbres tournants coaxiaux positionnés l'un par rapport à l'autre, et plus particulièrement à une liaison flexible, amovible et non sujette au matage des surfaces an contact, ledit positionnement étant assuré par des moyens extérieurs à l'invention. L'application prévue non exclusivement est l'entraînement d'une vanne cryotechnique d'un moteur de fusée.

### Etat de la technique et problème à résoudre

Dans un moteur de fusée à carburant liquide, la transmission d'un mouvement de rotation depuis le système de commande d'une vanne cryotechnique vers l'arbre de cette vanne cryotechnique se heurte à une combinaison de difficultés: importance de la vitesse et du couple à transmettre, régime vibratoire élevé, température élevée ou très basse du fluide dans la vanne cryotechnique, les transferts de chaleur entre la vanne cryotechnique et son système de commande devant cependant rester limités. A cela s'ajoutent la nécessité d'une grande légèreté, pour augmenter la charge utile de la fusée, ainsi que d'une très grande fiabilité compte tenu d'impératifs de sécurité, du coût élevé de la fusée et surtout de son chargement. Dans ce qui suit et par commodité de langage, on parlera plus généralement de la prise de mouvement en rotation d'un équipement monté sur un ensemble principal, sans préjudice cependant de l'importance en tant qu'objets de l'équipement et de l'ensemble principal.

Une solution connue depuis longtemps consiste à disposer une fente selon un diamètre à l'extrémité de l'un des arbre, alors que l'autre arbre comporte à son extrémité un couteau venant pénétrer dans la fente lorsque l'on monte l'équipement sur l'ensemble principal. Une telle liaison ne convient cependant qu'à une liaison de faible puissance avec un faible couple, car les surfaces de la fente et du couteau frottent entre elles avec une forte pression surfacique selon un mouvement alterné du fait de l'inévitable écart entre les axes géométriques de rotation de chacun des arbres. Ce frottement provoque le matage et la dégradation rapide des surfaces en contact. L'utilisation d'un lubrifiant améliore la durabilité de la liaison, mais ce lubrifiant empêche d'utiliser la liaison à des températures trop basses ou trop élevées.

Une solution également connue depuis longtemps consiste à disposer à l'extrémité de l'un des arbres des cannelures mâles ainsi que des cannelures femelles à l'extrémité de l'autre arbre, l'interpénétration des cannelures mâles et femelles se faisant simplement lors du montage de l'équipement sur l'ensemble principal. Les performances d'une telle liaison sont augmentées en terme de couple transmis et de durabilité, du fait de la multiplication des surfaces en contact, mais les inconvénients précédemment décrits subsistent, bien qu'à un moindre niveau.

On connaît également, par exemple par le brevet FR2409417, des accouplements flexibles à lames métalliques empilées mais séparées entre elles par des rondelles, lesdites lames présentant quatre coins, lesdites lames étant boulonnées par deux coins opposés sur un premier étrier solidaire d'un premier arbre, lesdites lames étant boulonnées par les deux autres coins sur un second étrier solidaire de l'autre arbre. Une telle liaison ne présente pas les inconvénients précédents et de plus, elle oppose une bonne résistance aux transferts de chaleur. Cependant:
- son assemblage entre l'équipement et l'ensemble principal pose des problèmes délicats,
- le boulonnage crée une source de panne supplémentaire, car le desserrage de l'un des boulons, bien que peu probable, ne peut être complètement exclu, et il provoquerait alors la destruction rapide de la liaison,
- le positionnement axial des arbres doit être très précis pour ne pas provoquer une flexion axiale des lames, car cette flexion favoriserait la rupture par flambement des parties en compression des lames sous l'effet du couple à transmettre.

On connaît également des organes mécaniques appelés "soufflets", lesdits soufflets se présentant sous la forme d'un cylindre de révolution à paroi mince, ladite paroi étant ondulée dans le sens de la longueur du cylindre, chaque ondulation en saillie ou en creux étant disposée selon une circonférence du cylindre. Du fait de leur élasticité, ces soufflets sont habituellement utilisés pour entourer et protéger des accouplements entre arbres tournants. Les documents "Techniques de l'ingénieur",fascicule B5805 page 6 nous enseigne que de tels soufflets peuvent aussi constituer un accouplement élastique entre deux arbres tournants. Un tel accouplement en soi ne résout cependant pas les problèmes posés.

### Exposé de l'invention

L'invention propose une liaison de puissance en rotation de deux arbres tournants coaxiaux positionnés l'un par rapport à l'autre, lesdits arbres étant coaxiaux selon un axe géométrique de rotation, lesdits arbres comportant chacun une extrémité en face l'une de l'autre, lesdites extrémités étant susceptibles d'arriver dans une position rapprochée par une translation relative l'une vers l'autre selon l'axe géométrique de rotation, ladite liaison étant active dans cette position rapprochée, ladite liaison étant inactive lorsque lesdites extrémités sont éloignées, ladite liaison comportant des moyens d'entraînement en rotation par interpénétration, lesdits moyens d'entraînement comportant une première partie femelle solidaire de l'extrémité du premier arbre, lesdits moyens d'entraînement comportant également une seconde partie mâle solidaire de l'extrémité du second arbre, ladite partie femelle comportant au moins deux creux dont l'ouverture est tournée vers l'extrémité du second arbre, lesdits creux comportant chacun deux flancs femelles en regard l'un de l'autre, lesdits flancs femelles ayant une forme non circulaire par rapport à l'axe géométrique de rotation, ladite partie mâle comportant au moins deux dents dont le sommet est tourné vers l'extrémité du premier arbre, lesdites dents comportant chacune deux flancs mâles en opposition l'un de l'autre, lesdits flancs mâles ayant une forme non circulaire par rapport à l'axe géométrique de rotation, lesdits flancs femelles et lesdits flancs mâles étant de formes complémentaires, lesdites dents pénétrant dans lesdits creux lorsque les extrémités des deux arbres sont en position rapprochée, lesdites dents sortant desdits creux lorsque lesdites extrémités sont éloignées.
On comprend que l'entraînement en rotation s'effectue par la poussée de l'un des flancs femelle ou mâle de chaque ensemble creux + dents contre un autre flanc mâle ou femelle dudit ensemble creux + dents, du fait que les flancs mâles et femelles sont de formes complémentaires et non circulaires par rapport à l'axe géométrique de rotation.

Une telle liaison est remarquable en ce que:
a) Les flancs femelles d'un même creux sont évasés vers l'ouverture dudit creux alors que les flancs mâles d'une même dent sont rapprochés vers le sommet de ladite dent.
b) La liaison comporte également un segment flexible disposée entre l'une des partie et l'extrémité correspondante, ledit segment flexible étant solidaire par un coté à ladite partie, ledit segment flexible étant solidaire par son autre coté à ladite extrémité correspondante, ledit segment flexible comportant une flexibilité axiale et radiale, ledit segment flexible étant axialement en compression lorsque les extrémités des arbres sont en position rapprochée, ceci afin simultanément d'autoriser le déplacement relatif de ladite partie et de ladite extrémité par la déformation élastique du segment flexible, et de produire une poussée axiale F permanente entre ladite partie et ladite extrémité correspondante par la compression élastique de ce même segment flexible.
c) Lorsque les extrémités des arbres sont en position rapprochée, les deux flancs mâles de chaque dent appuient simultanément contre les deux flancs femelles du creux dans lequel se trouve ladite dent sous l'effet de la poussée axiale F.

On comprend qu'une telle disposition permet simultanément de rendre la liaison élastiquement déformable par déformation élastique du segment flexible et de s'opposer aux déplacements relatifs sous charge des flancs mâles et femelles par l'appui simultané des deux flancs mâles de chaque dent contre les deux flancs femelles du creux dans lequel se trouve ladite dent. Le résultat est de rendre flexible et sans matage par frottement une telle liaison de puissance entre deux arbres tournants positionnés l'un par rapport à l'autre, ladite liaison étant par ailleurs amovible par le simple éloignement des extrémités desdits arbres.

Si on appelle P les points de contact entre les flancs mâles et les flancs femelles, la poussée axiale de réaction F' générée par le couple d'entraînement entre les arbres est fonction de l'angle d'incidence a des flancs femelles et mâles en ces points P par rapport à un plan géométrique passant par l'axe géométrique de rotation et le point P correspondant. En jouant sur la flexibilité du segment flexible et sur le positionnement des extrémités des arbres permettant de mettre en compression axiale ledit segment flexible, l'homme du métier donnera à la poussée axiale F une valeur supérieure à la poussée axiale de réaction F', afin d'empêcher la liaison de se désolidariser sous l'effet du couple d'entraînement. L'homme du métier adoptera un angle d'incidence a faible, par exemple inférieur à 10°, voire 5°, de façon à réduire F' et F, F devant être reprise par les paliers supportant les arbres.

Un premier avantage de l'invention est de pouvoir être mise en oeuvre sans lubrifiant. On comprend en effet que les seules surfaces arrivant en contact, soit les flancs mâles et femelles, ne peuvent frotter entre elles pour deux raisons:
- la présence du segment flexible réduit les contraintes susceptibles d'apparaître entre les deux arbres en rotation du fait des inévitables écarts entre les axes des deux arbres provenant des tolérances d'usinage,
- les flancs femelles et mâles sont fortement pressés les uns contre les autres, et ils ne peuvent se déplacer les uns par rapport aux autres tant que le couple à transmettre reste inférieur au couple nécessaire pour produire une force axiale de réaction F' au moins égale à la force axiale F résultant de la mise en compression de l'élément flexible.

Un second avantage de l'invention est de procurer une grande sécurité au montage. En effet, le seul cas où l'entraînement en rotation ne peut se faire correspond à celui où les dents ne pénètrent pas dans les creux, cette situation empêchant alors le rapprochement des extrémités des arbres et par répercussion l'assemblage de la machine concernée. Malgré cette sécurité, le montage est très rapide puisqu'il suffit d'effectuer le rapprochement des extrémités des arbres.

Un autre avantage de l'invention est de permettre l'augmentation des tolérances dans le positionnement relatif des arbres entre eux.

Avantageusement, le segment flexible est constitué par un soufflet. Une telle disposition a pour effet simultanément de réduire la section de matière du segment flexible et d'augmenter la longueur de matière entre les cotés dudit segment flexible, et pour résultat de réduire la conductance thermique de la liaison et par répercussion les transferts de chaleur d'un arbre à l'autre.

Une telle liaison présente aussi l'avantage d'une bonne souplesse tout en conservant a la paroi du segment flexible une épaisseur normale compatible avec les impératifs de fabrication du soufflet.

Une telle liaison présente aussi l'avantage d'être peu encombrante radialement.

Avantageusement aussi, le soufflet est en matériau métallique flexible, ce qui permet d'exploiter la liaison à des températures extrêmes. Par exemple, avec un soufflet en Inconel 625 de formule métallurgique NC22DNb, la liaison est exploitable sans autres restrictions à la température de l'hélium liquide, soit -269°C, et jusqu'à une température de 500°C.

Avantageusement, la liaison constitue une prise de mouvement en rotation entre un équipement et un ensemble principal, ledit équipement étant monté sur l'ensemble principal, l'un des arbres étant un constituant de l'ensemble principal, alors que l'autre arbre est un constituant de l'équipement. Une telle liaison présente l'avantage de pouvoir être facilement intégrée dans l'ensemble principal et l'équipement et de pouvoir être assemblée par le simple montage de l'équipement sur l'ensemble principal.

Avantageusement, la liaison est en matériau métallique flexible tel de l'Inconel 625 et constitue une prise de mouvement en rotation entre une vanne cryotechnique et son actionneur ou moteur de commande, l'un des arbres étant un constituant de la vanne cryotechnique, alors que l'autre arbre est un constituant de l'actionneur.

### Description des figures

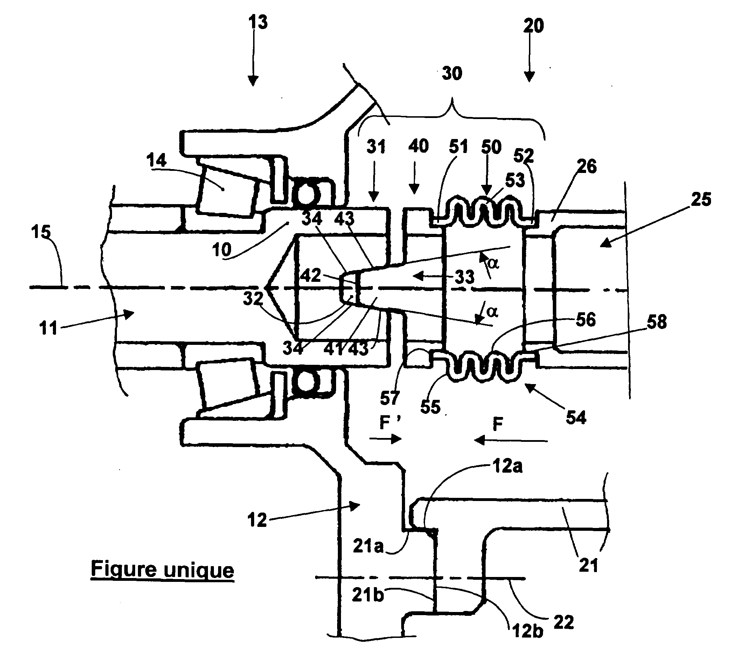

L'invention sera mieux comprise, et les avantages qu'elle procure, apparaîtront plus clairement, au vu de la description détaillée d'un exemple de réalisation de l'invention et de la figure unique annexée illustrant la prise de mouvement d'un équipement, tel une vanne cryotechnique et son actionneur dans un moteur de fusée, ladite prise de mouvement étant représentée avec les extrémités des arbres en position rapprochée.

### Description détaillée

On se reportera à la figure unique. L'extrémité 10 d'un premier arbre 11 arrive devant une ouverture non référencée du carter 12 d'un ensemble principal 13. Cet arbre de l'ensemble principal 11 est guidé en rotation et positionné en translation par au moins un palier à roulement 14 logé dans le carter de l'ensemble principal 12, ledit arbre 11 tournant en conséquence selon un axe géométrique de rotation référencé 15. Un équipement 20 comporte un carter 21 par lequel il est assemblé sur le carter de l'ensemble principal 12 à l'aide d'une pluralité de vis 22. Le carter de l'équipement 21 comporte une portée cylindrique mâle 21a qui est introduite dans une portée cylindrique femelle 12a du carter de l'ensemble principal 12, ladite portée cylindrique femelle 12a étant coaxiale à l'axe géométrique de rotation 15. Le carter de l'équipement 21 comporte également une surface d'appui annulaire 21b qui arrive en appui sur une surface d'appui annulaire 12b du carter de l'ensemble principal 12 sous l'effet de la pression des vis 22, ladite surface d'appui annulaire 12b entourant la portée cylindrique femelle 12a et étant perpendiculaire à l'axe géométrique de rotation 15. L'équipement 20 comporte également un arbre 25 coaxial à la portée cylindrique mâle 21a et perpendiculaire à la surface d'appui 21b dudit équipement 20. L'arbre de l'équipement 25 est guidé en rotation et positionné en translation par des paliers non représentés à l'intérieur du carter de l'équipement 21.

Ainsi, avec cette disposition:
- lorsque l'équipement 20 est monté sur l'ensemble principal 13, l'arbre de l'équipement 25 est coaxial à l'arbre de l'ensemble principal 11, et les extrémités 10,26 respectivement des arbres 11,25 sont alors positionnées à une distance précise l'une de l'autre,
- pendant le montage de l'équipement 20 sur l'ensemble principal 13, lesdites extrémités 10,26 se rapprochent l'une de l'autre selon une translation selon l'axe géométrique de rotation 15,
- alors que pendant le démontage, lesdites extrémités 10,26 s'éloignent l'une de l'autre selon une translation en sens inverse.

L'entraînement en rotation entre les deux arbres 11,25 s'effectue avec une liaison 30 comportant an premier lieu une partie femelle 31 solidaire par exemple de l'extrémité 10 de l'arbre de l'ensemble principal 11. Cette partie femelle 31 a une forme générale annulaire de révolution selon l'axe géométrique de rotation 15 et comporte trois creux 32 répartis à 120° les uns des autres sur la partie femelle 31, lesdits creux 32 comportant chacun une ouverture 33 dirigée vers l'extrémité 26 de l'arbre de l'équipement 25, chaque creux 32 comportant deux flancs femelles 34 en regard l'un de l'autre et évasés vers l'ouverture 33. Dans cet exemple, les flancs femelles 34 sont plans et forment entre eux un angle 2.a de 10°. Dans cet exemple également, la partie femelle 31 est solidaire de l'extrémité 10 de l'arbre de l'ensemble principal 11 par continuité de la matière, cette partie femelle 31 pouvant être directement usinée au bout de cet arbre 11.

La liaison 30 comporte également une partie mâle 40 ayant une forme générale annulaire de révolution selon l'axe géométrique de rotation 15a, ladite partie mâle 40 comportant trois dents 41 à 120° les unes des autres, chaque dent 41 comportant un sommet 42 tourné vers l'extrémité de l'arbre de l'ensemble principal 10, chaque dent 41 comportant deux flancs mâles 43 plans et opposés formant entre eux un angle de 2a =10°, lesdits flancs mâles 43 ayant une forme complémentaire aux flancs femelles 34. La partie mâle 40 est solidaire de l'extrémité 26 de l'arbre de l'équipement 25 par l'intermédiaire d'un soufflet 50 flexible et métallique en Inconel 625 de formule métallurgique NC22DNb, ledit soufflet 50 ayant une forme générale cylindrique de révolution selon l'axe géométrique de rotation 15, ledit soufflet 50 étant soudé par un premier coté 51 à la partie mâle 40, ledit soufflet 50 étant soudé par son coté opposé à l'extrémité 26 de l'arbre de l'équipement 25.

Lorsque l'équipement 20 est monté sur l'ensemble principal 13, les dents 41 pénètrent dans les creux 32, alors que le soufflet 50 est mis en compression et produit une poussée axiale F qui appuie fortement les flancs mâles 43 contre les flancs femelles 34. Le faible angle d'inclinaison a des flancs femelles 34 et mâles 43 multiplie celle force d'appui. Du fait de cet angle d'inclinaison a, le couple d'entraînement en rotation combiné aux régîmes vibratoires crée aussi une poussée axiale de rotation F' opposée à F, la poussée F' étant cependant réduite du fait de la faible inclinaison a des flancs femelles 34 et mâles 43. L'homme du métier ajustera la poussée axiale F de façon à ce qu'elle soit au moins égale à la poussée axiale de réaction F' à tous les régimes envisagés, ce qui permet de maintenir en appui les flancs femelles 34 et mâles 43 les uns contre les autres, afin d'éviter les déplacements relatifs desdits flancs 34,43 , lesdits déplacements relatifs étant générateurs de frottements et de matage desdits flancs 34,43.

On comprend que la mise en compression du soufflet 50 se fait dans cet exemple très simplement par le serrage des vis 22. On comprend aussi que la disposition à 120° des trois creux et dents 32,41 produisent un effet d'autocentrage de la partie femelle 31 par rapport à la partie mâle 40. De ce fait, les forces radiales crées par un défaut d'alignement des arbres 11,25 ou par un défaut géométrique du soufflet 50 sont reprises presque intégralement par les flancs femelles et mâles 34,43 , et ne peuvent en conséquence donner lieu à un glissement suivant une direction radiale des flancs femelles 34 par rapport aux flancs mâles 43.

Le soufflet 50 comporte une paroi mince et flexible 53 de forme générale cylindrique de révolution selon l'axe géométrique de rotation 15, ladite paroi mince 53 comportant cependant une ondulation 54 dans le sens de la longueur, ladite ondulation 54 faisant en conséquence une alternance de bosses 55 et de creux 56 annulaires, lesdites bosses 55 s'écartant radialement vers l'extérieur de la position moyenne de la paroi mince 53, lesdits creux s'écartant radialement vers l'intérieur de cette même position moyenne de ladite paroi mince 53, ladite ondulation 54 donnant ainsi à ladite paroi mince 53 une bonne flexibilité radiale et axiale tout en maintenant à ladite paroi mince 53 une bonne aptitude à transmettre un couple selon l'axe géométrique de rotation 15. La paroi mince 53 est prolongée de part et d'autre par les cotés 51 et 52 sensiblement cylindriques, un premier coté 51 étant axialement positionné, centré et soudé sur un épaulement 57 de la partie mâle 40, le second coté 52 étant axialement positionné, centré et soudé sur un épaulement 58 à l'extrémité 26 de l'arbre de l'équipement 20.

L'invention ne saurait être limitée à l'exemple de réalisation qui vient d'en être donné, mais elle en couvre également toutes les variantes supportées par les revendications.

Les dents et les creux peuvent être en nombre variable au moins égal à deux, l'ensemble des dents et des creux restant axisymétriques par rapport à l'axe géométrique de rotation des arbres. On remarquera que dans le cas où la distance entre deux creux est égale à la largeur des dents, la distinction entre la partie femelle et la partie mâle perd son sens.

Le segment flexible peut être indistinctement disposé du coté femelle ou du coté mâle, en fonction des contraintes d'environnement de la liaison. Dans le cas d'une prise de mouvement, la partie femelle ou la partie mâle, ainsi que le segment flexible, peuvent être indistinctement disposés sur l'équipement ou sur l'ensemble principal, ceci également en fonction des contraintes d'environnement de la liaison.

Les arbres peuvent être disposés bout à bout, mais aussi concentriquement l'un autour de l'autre.

Le rapprochement des extrémités des arbres peut se faire aussi par la translation directe des arbres l'un par rapport à l'autre.

Les deux arbres tournants positionnés l'un par rapport à l'autre peuvent bien entendu appartenir à un même ensemble ou à deux ensembles montés l'un avec l'autre sans préjuger de l'importance relative d'un ensemble par rapport à l'autre, par exemple un moteur rotatif avec un réducteur de vitesse.

## Revendications

1. Liaison de puissance en rotation de deux arbres tournants coaxiaux positionnés l'un par rapport à l'autre, lesdits arbres (11,25) étant coaxiaux selon un axe géométrique de rotation (15), lesdits arbres (11,25) comportant chacun une extrémité respectivement (10,26) en face l'une de l'autre, lesdites extrémités (10,26) étant susceptibles d'arriver dans une position rapprochée par une translation relative l'une vers l'autre selon l'axe géométrique de rotation (15), ladite liaison (30) étant active dans cette position rapprochée, ladite liaison étant inactive lorsque lesdites extrémités (10,26) sont éloignées, ladite liaison (30) comportant des moyens (31,40) d'entraînement en rotation par interpénétration, lesdits moyens d'entraînement (31,40) comportant une partie femelle (31) solidaire de l'extrémité d'un premier arbre (11,25), lesdits moyens d'entraînement (31,40) comportant également une partie mâle (40) solidaire de l'extrémité du second arbre (25,11), ladite partie femelle (31) comportant au moins deux creux (32) dont l'ouverture (33) est tournée vers l'extrémité du second arbre (26,10), lesdits creux (32) comportant chacun deux flancs femelles (34) en regard l'un de l'autre, lesdits flancs femelles (34) ayant une forme non circulaire par rapport à l'axe géométrique de rotation (15), ladite partie mâle (40) comportant au moins deux dents (41) dont le sommet (42) est tourné vers l'extrémité du premier arbre (10,26), lesdites dents (41) comportant chacune deux flancs mâles (43) en opposition l'un de l'autre, lesdits flancs mâles (43) ayant une forme non circulaire par rapport à l'axe géométrique de rotation (15), lesdits flancs femelles (34) et lesdits flancs mâles (43) étant de formes complémentaires, lesdites dents (41) pénétrant dans lesdits creux (32) lorsque les extrémités des deux arbres (10,26) sont en position rapprochée, lesdites dents (41) sortant desdits creux (32) lorsque lesdites extrémités des arbres (10,26) sont éloignées, caractérisée en ce que:
a) les flancs femelles (34) d'un même creux (32) sont évasés vers l'ouverture (33) dudit creux (32) alors que les flancs mâles (43) d'une même dent (41) sont rapprochés vers le sommet (42) de ladite dent (41),
b) la liaison comporte également un segment flexible (50) disposée entre l'une des partie (31,40) et l'extrémité de l'arbre (10,26) correspondante, ledit segment flexible (50) étant solidaire par un coté (51) à ladite partie (31,40), ledit segment flexible (50) étant solidaire par son autre coté (52) à ladite extrémité de l'arbre (10,26) correspondante, ledit segment flexible (50) comportant une flexibilité axiale et radiale, ledit segment flexible (50) étant axialement en compression lorsque les extrémités des arbres (10,26) sont en position rapprochée, ceci afin simultanément d'autoriser le déplacement relatif de ladite partie (31,40) et de ladite extrémité (10,26) par la déformation élastique du segment flexible (50), et de produire une poussée axiale F permanente entre ladite partie (31,40) et ladite extrémité de l'arbre (10,26) correspondante par la compression axiale élastique de ce même segment flexible (50),
c) lorsque les extrémités des arbres (10,26) sont en position rapprochée, les deux flancs mâles (43) de chaque dent (41) appuient simultanément contre les deux flancs femelles (34) du creux (32) dans lequel se trouve ladite dent (41) sous l'effet de la poussée axiale F.

2. Laison selon la revendication 1 caractérisée en ce que le segment flexible (50) est constitué par un soufflet (50).

3. Liaison selon la revendication 2 caractérisée en ce que le soufflet (50) est en matériau métallique flexible.

4. Liaison selon l'une quelconque des revendications 1 à 3 caractérisée en ce qu'elle constitue une prise de mouvement en rotation entre un équipement (20) et un ensemble principal (13), ledit équipement (20) étant monté sur l'ensemble principal (13), l'un des arbre (11,25) étant un constituant de l'ensemble principal (13), alors que l'autre arbre (25,11) est un constituant de l'équipement (20).

5. Liaison selon la revendication 3, caractérisée en ce qu'elle constitue une prise de mouvement en rotation entre une vanne cryotechnique (20) et son actionneur (13), l'un des arbre (11,25) étant un constituant de l'actionneur (13), alors que l'autre arbre (25,11) est un constituant de la vanne cryotechnique (20).
